# EUROPEAN PATENT SPECIFICATION

(11) **EP 1 475 921 B1**
(45) Date of publication and mention of the grant of the patent: **30.09.2009**
(21) Application number: 03701456.0
(22) Date of filing: 21.01.2003
(51) Int. Cl.: H04W 4/06

(54) **A METHOD FOR PROVIDING REAL-TIME BROADCAST SERVICE IN THE MOBILE COMMUNICATION NETWORK**
VERFAHREN ZUR BEREITSTELLUNG EINES ECHTZEIT-RUNDSENDEDIENSTES IM MOBILKOMMUNIKATIONSNETZWERK
PROCEDE PERMETTANT D'OFFRIR UN SERVICE DE DIFFUSION EN TEMPS REEL DANS UN RESEAU DE COMMUNICATION MOBILE

(30) Priority: 23.01.2002 CN 02100607; 23.01.2002 CN 02100608
(43) Date of publication of application: 10.11.2004
(73) Proprietor: Huawei Technologies Co., Ltd., Nanshan District, Shenzhen 518057 (CN)
(72) Inventor: LU, Yifeng Huawei Service Centre Building,, Nanshan District Shenzhen 518057 (CN); LI, Chengjun Huawei Service Centre Building, Nanshan District, Shenzhen 518057 (CN); ZENG, Hai Huawei Service Centre Building, Nanshan District, Shenzhen 518057 (CN); CHEN, De Huawei Service Centre Building, Nanshan District, Shenzhen 518057 (CN)
(74) Representative: Mounteney, Simon James
(86) International application number: PCT/CN2003/000053
(87) International publication number: WO 2003/063416

(56) References cited:
- WO-A-03/030453
- WO-A1-00/79734
- WO-A1-94/10803
- CN-A- 1 090 444
- CN-A- 1 357 179
- US-A- 5 471 463
- ELSEN I. ET AL: 'STREAMING TECHNOLOGY IN 3G MOBILE COMMUNICATION SYSTEMS' COMPUTER vol. 34, no. 9, 01 September 2001, IEEE SERVICE CENTER, LOS ALAMITOS, CA, US, pages 46 - 52, XP001102082

## Description

### Field of the Technology

The present invention relates to mobile communication technology field, especially to a method for implementing real-time broadcast in the 3^{rd} generation Code Division Multiple Access (CDMA) mobile communication system, namely a method and a mobile communication system for providing real-time broadcast service by setting special broadcasting resources.

### Background of the Invention

In the prior 2^{nd} generation mobile communication system, the provided services are simplex due to bandwidth limitation. For instance, the voice communication is the major service. In the 2.5^{th} generation mobile communication system although data service has been developed, the application is confined in information inquiry service because of the data rate limitation. In the prospective 3^{rd} generation mobile communication system multimedia service will be provided, possibly leading to multimedia broadcast service and multicast service in the 3^{rd} generation mobile communication system.

At present there are two ways for providing broadcast service at the mobile terminal:
(1) Integrating radio receiver or television receiver in the mobile terminal, receiving the broadcast program provided by the existing wireless broadcasting network or television network to listen or watch. The advantage is that the existing network resources are utilized and no modification for the mobile network is needed. However the disadvantage is quite apparent too. As radio circuit or television receiver circuit needs to be integrated in the mobile terminal, the cost of mobile terminal will be greatly increased. Especially, when a television receiver is being integrated, there are the problems of great integrating difficulty and no guarantee for receiving effect.
(2) Utilizing mobile network to provide video on demand or audio on demand. For instance, since the broadcast channel capacity is not sufficient, the existing channel can only transmit data with low speed and low requirement for real-time performance in the technology criterion of the prior 3^{rd} generation mobile communication system. As to the television programs or broadcasting programs with high speed and high requirement for real-time performance, the service cannot be provided but through video on demand by users. The disadvantage is that as to some broadcasting programs with high real-time performance, such as live television news and sports programs, the network resources cannot be shared because video on demand for each user must occupy one channel, leading to the waste of resources. Furthermore, due to the resource limitation, it is impossible to meet the requirement that large amounts of users are watching programs at the same time.

Some documents related to broadcast services are discussed as follows:
WO 03/030453 A discloses method and apparatus for data packet transport in a wireless transmission system supporting broadcast transmissions.
WO 94110803 A1 discloses a system employing portable subscriber units of milliwatt transmitting power capacity, and increasing substantially the number of subscriber units operable at the base station.

### Summary of the Invention

A main object of the present invention is to propose a method for providing real-time broadcast service in the existing mobile communication system, in which real-time broadcast service is provided by setting special broadcast resources with large coverage, namely special scrambling codes or special carriers.

To achieve the above-mentioned object, the specific technical scheme of this invention is as follows: a method for providing a real-time broadcast service in a mobile communication system, the mobile communication system comprises a radio access network and a plurality of mobile terminals, where the radio access network has an original service hierarchy with original service resources;
characterized by:
linking the real-time broadcast service to the radio access network (14);
adding a broadcast service hierarchy into the radio access network (14), assigning downlink special broadcast resources for the broadcast service hierarchy, the broadcast service hierarchy comprising a plurality of cells adopting different broadcast resources than the corresponding cells in the original service hierarchy, wherein the downlink special broadcast resources different from the original service resources are special scrambling codes or special carriers for providing the real-time broadcast service, and broadcasting the real-time broadcast service to the mobile terminals (15) through the downlink special broadcast resources;
   wherein:
   the mobile terminals (15) communicate with the radio access network (14) using the original service resources of the original service hierarchy, receive the real-time broadcast service using the downlink special broadcast resources, switch between the original service hierarchy and the broadcast service hierarchy, monitor paging of a cell when in the broadcast service hierarchy and switch from the broadcast service hierarchy to the original service hierarchy when the user of the mobile terminal needs to reply or initiate a call.

The process of linking the real-time broadcast service to the radio access network comprising:
transmitting content information of the real-time broadcast service to an information transmitting server, and accessing the content information of the real-time broadcast service to the radio access network by the information transmitting server.

In the present invention, two different technical schemes are devised by setting two kinds of special broadcast resources, namely special carrier resources and special scrambling code resources.

The downlink special broadcast resources are downlink special carrier frequencies;
the method further comprising: dividing the broadcast service hierarchy into cells, the adjacent cells employ different scrambling codes, and defining multiple cells into a location area; and
when switching to the broadcast service hierarchy, the mobile terminal staying in a cell of the broadcast service hierarchy, controlling handoff of the cell, and monitoring paging of the cell in the broadcast service hierarchy.

The downlink special broadcast resources are downlink special scrambling codes;
the method further comprising: superposing the locations of cells of the broadcast service hierarchy over those of the original service hierarchy so as to form the structure of the cell of the original service hierarchy plus the cell of the broadcast service hierarchy, wherein the cells utilize the same downlink special scrambling code and a same special broadcast channel code for transmitting real-time broadcast information, the working mode of the mobile terminal keeps unchanged for the original service, pilot channel of the cells in the original service hierarchy is shared, and the real-time broadcast service is supported under both idling mode and connecting mode.

In the present invention, real-time broadcast service with high data rate can be supported by setting special carrier in the prior mobile communication system. When setting special carrier the cell coverage and location division of broadcast service hierarchy and the original service hierarchy can be either superposed or not. When using the special carrier, paging information is sent in the broadcast service hierarchy; when using the special carrier and there is only one set of receiver system in the terminal, the terminal sends location update information through the original service hierarchy and receives the confirming information through the broadcast service hierarchy. When using the special carriers, the service providers providing real-time broadcast service can activate or shutdown the transmitting signals of broadcast service in response of requirements.

With the method according to this present invention, real-time service with high data rate, such as real-time broadcast service, can be supported by setting special scrambling codes in the prior mobile communication system. When using the special scrambling codes, each cell of the broadcast service hierarchy utilizes the same scrambling code and channel code. When using the special scrambling codes, range and location division of the cell of the original service hierarchy plus broadcast service hierarchy is the same as that of the macro cell of the original service hierarchy. When using the special scrambling codes, the mobile terminal can implement interfere canceling with known information about broadcast service scrambling code and channel code, channel estimation information of the current cell and adjacent cells as well as demodulated broadcast service information so as to improve the receiving ability for other service channels. When using the special scrambling codes, the service providers providing real-time broadcast service can activate or shutdown the transmitting signals of broadcast service in response of requirements.

Accordingly, compared with the prior art, the method for providing real-time broadcast service in a mobile communication system according to the present invention has the following advantages:
1. The mobile terminal can receive television programs and radio programs with the existing function modules. There is no need to set additional receiving circuit, which is helpful for increasing the integration degree of the mobile terminal and decreasing device cost.
2. The receiving effect of the mobile terminal when receiving broadcast programs is guaranteed by making use of the existing vast covering mobile network to support real-time broadcast service.
3. Compared with the mode of program on demand and that of the user accessing broadcast program independently, since the same one network source supporting real-time broadcast service can provide real-time broadcast service to more than one mobile user simultaneously, the capacity factor and system capacity of wireless resources are increased.

### Brief Description of the Drawings

Figure 1 is a schematic diagram illustrating network structure of the mobile communication system for providing real-time broadcast service.
Figure 2 is a schematic diagram illustrating cell structure of setting single down link carrier when the special carrier resources are adopted.
Figure 3 is a schematic diagram illustrating frequency setting of the down link special carrier when the special carrier resources are adopted.
Figure 4 is a block diagram illustrating system structure and operating principle of mobile terminal when the special carrier resources are adopted.
Figure 5 is a schematic diagram illustrating cell structure of setting single down link special scrambling codes when the special scrambling code resources are adopted.
Figure 6 is a schematic diagram illustrating flow chart of transmitting procedure in the base station when the down link special scrambling codes are set.
Figure 7 is a block diagram illustrating system structure and operating principle of mobile terminal when the special scrambling code resources are adopted.

### Detailed Description of the Invention

Now, the present invention will be described in detail hereinafter with reference to the accompanying drawings.

In the present invention, real-time broadcast service is provided by setting special broadcast resources with large coverage property in the existing 3^{rd} generation mobile communication system, namely by setting special scrambling codes or special carriers.

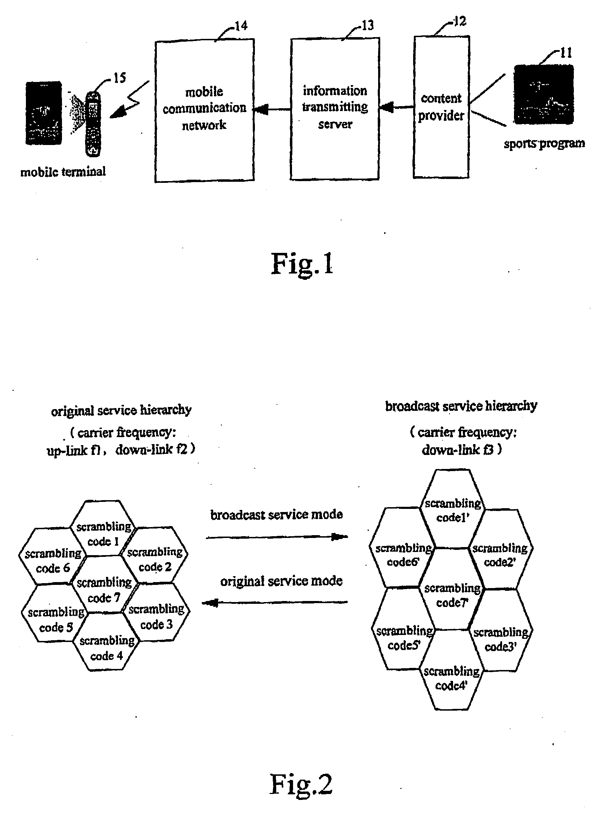

Figure 1 shows the network structure of the mobile communication system when the special broadcast resources are adopted to provide real-time broadcast service. A live sports program 11 is provided to a live broadcast service content provider 12, then the content provider 12 transmits this live sports program to an information transmitting server 13. The information transmitting server 13 accesses the program to a mobile communication system 14, at the air interface of the mobile communication system 14 this live sports program is broadcast real-timely to a mobile terminal 15 by setting special broadcasting resources (special carriers or special scrambling codes). The mobile terminal 15 operates with the original service hierarchy mode or broadcast service hierarchy mode, which can be switched with each other. Wire connection mode can be adopted between the content provider 12, the information transmitting server 13 and the mobile communication system 14.

With reference to figure 2, this figure illustrates the structure and operating principle of wireless access network when the technology scheme using special carriers is adopted. This is the system structure after the broadcast service mode is newly added.

In the technology scheme using special carriers according to the present invention, the wireless access network is divided into original service hierarchy and broadcast service hierarchy, according with the added broadcast service mode and original service mode indicated by the arrowheads. The carrier frequency of original service hierarchy includes up-link carrier frequency f1 and down-link carrier frequency f2. The original service hierarchy provides services like speech communication, data transmission, wireless internet, video on command and so on. The added broadcast service hierarchy just needs to set single down-link carrier frequency f3 in order to specially provide real-time broadcast service.

Broadcast service hierarchy is also divided into multiple cells and those adjacent cells adopt different scrambling codes shown in Figure 2 with scrambling code1', scrambling code2',..., scrambling code7'. These scrambling codes correspond to those adopted in the original service hierarchy at physical positions shown in Figure 2 with scrambling code1, scrambling code2,..., scrambling code7. But the cells in broadcast service hierarchy cover more areas than those in the original service hierarchy. Like the original service hierarchy mode, several cells in the broadcast service hierarchy can be combined into the same location area. There is no direct relationship among the scrambling codes of original service hierarchy, namely scrambling code1, scrambling code2,..., scrambling code7, and the scrambling codes of broadcast service hierarchy, namely scrambling code1', scrambling code2',..., scrambling code7', that is, these scrambling codes can be either the same (the scrambling codes of broadcast service hierarchy can be scrambling code1, scrambling code2,..., scrambling code7) or not (shown as scrambling code1', scrambling code2',..., scrambling code7' in Figure 2). Moreover, the cells and location division of original service hierarchy and broadcast service hierarchy can either be superposed or not, which makes the network programming more flexible.

Broadcasting channels are set in the cells of broadcast service hierarchy so as to broadcast corresponding cell information, for example, the location area code, paging channel configuration information of the broadcast service hierarchy cell, as well as frequency, scrambling code, Random Access Channel (RACH), the public channels related to RACH such as AICH and Forward Access Channel (FACH) of the adjacent service hierarchy cells. Paging channels are also set in the cells of broadcast service hierarchy, so as to page the mobile terminals working under the broadcast service mode.

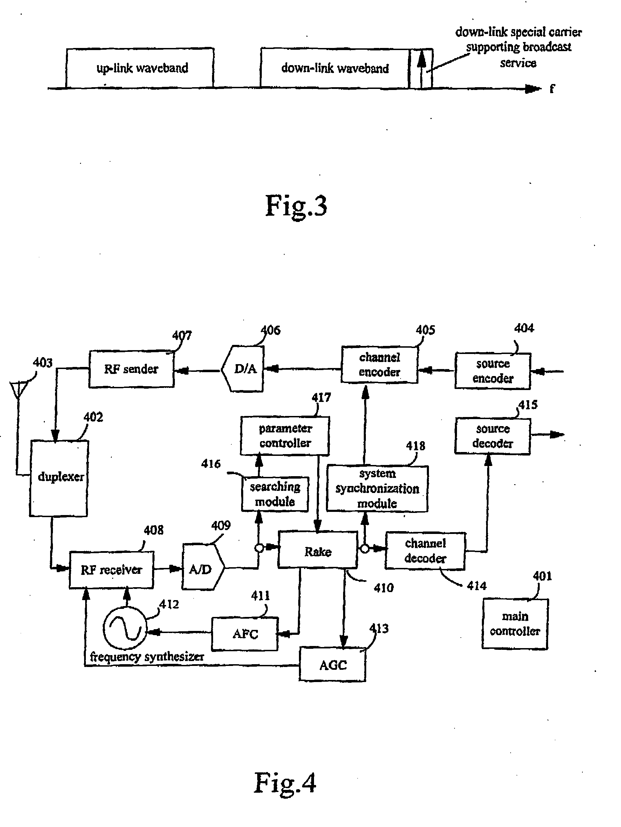

With reference to figure 3, the setting of down-link special carrier frequency f3 in broadcast service hierarchy is illustrated. In order to decrease the complexity of mobile terminals and avoid the down-link special carrier frequency to interfere with the original base station, illustrated by the arrowheads shown in Figure 3, a frequency adjoining the high side of the down-link waveband should be selected as the down-link special carrier frequency to support broadcast service, along the frequency axis and behind the original up-link waveband and down-link waveband.

With reference to figure 4, the structure and operating principle of the mobile terminal when the technical scheme of using special carriers is adopted is illustrated. In this embodiment, only one set of receiving and synchronizing system is set up in order to reduce the cost of mobile terminal. What is shown in Figure 4 is the hardware structure of the prior mobile terminal. This structure includes a transmitting unit which is comprised of a main controller 401, a sending unit constituted by a source encoder 404, a channel encoder 405, a Digital/Analog (D/A) converter 406 and a Radio Frequency (RF) sender 407, a receiving unit which is comprised of a Radio Frequency (RF) receiver 408, an Analog /Digital (A/D) converter 409, a frequency synthesizer 412, a searching module 416, a parameter controller 417, a RAKE combining receiver 410, an Automatic Frequency Control (AFC) module 411, an Automatic Gain Correction (AGC) module 413, a channel decoder 414, a source decoder 415 and a system synchronization module 418, as well as an antenna 403 and a duplexer 402 shared by the transmitting unit and the receiving unit.

When the mobile terminal is working under broadcast service mode, if the location registration is required for the mobile terminal, the mobile terminal selects a cell according to the frequency and scrambling code information of the adjacent cells in the original service hierarchy received in the broadcast service hierarchy, and sends the location update information, which is based on the location information of broadcast service hierarchy, to the core network. Then the mobile terminal returns to the broadcast service mode. After receiving the location update information of a certain mobile terminal, the core network sends a confirming message to the cell in broadcast service hierarchy. The specific implementation of sending location update confirming message can be carried out via the down-link channel of added carrier f3 or broadcast service channel by means of time slicing.

Accordingly, the mobile terminal can work under two modes, namely the original mobile paging service mode and the added mobile broadcast service mode. Under the original mobile paging service mode, the mobile terminal works at the original service hierarchy, stays in the cell of the original service hierarchy and operates according to the original working process. After switching to the broadcast service mode, the mobile terminal will stay in the cell of broadcast service hierarchy. When the mobile terminal is moving between different cells, handoff occurs. Since there is no upward link, the handoff procedure will be controlled only by the terminal and this handoff procedure is the same as that of the original service.

When the mobile terminal is moving among different location areas of broadcast service hierarchy, location update will be initiated and the up-link signal of location update will be sent through the original service hierarchy. In the present invention, the concept of location update is extended in term of the prior mobile network: the location update being triggered by the switching between the original service hierarchy and the broadcast service hierarchy, namely adopting the same mode as the original service hierarchy to trigger location update when location area change occurs under broadcast service mode. Through the location update, core network can exactly judge whether a certain mobile terminal is under broadcast service mode or original service mode, so as to page a terminal with pertinence.

The specific location update process under broadcast service mode is somewhat different from that under original service mode. The mobile terminal acquires the adjacent cell information in original service hierarchy through broadcast message of broadcast channel in broadcast service hierarchy, and sends out location update message through the Random Access Channel (RACH) in original service hierarchy.

For the mobile terminal with only one set of receiving system, the broadcast service has to be broken off for a short time when the location update is implemented. After the mobile terminal moves to a new cell in broadcast service hierarchy, location area change is detected by demodulating broadcast information and location update needs to be performed. Assuming that the present cell in broadcast service hierarchy is B1, the terminal obtains the information of cells adj acent to the B1 in original service hierarchy from the broadcast information of B1. The information can help the terminal to find a cell C1 as soon as possible, which is of the best communication quality and where the terminal can stay. Then the terminal initiates random access request in C 1 through Random Access Channel (RACH). After receiving AICH from C1, the frequency of terminal can be tuned to broadcast frequency f3, starting searching and synchronization with B 1 as early as possible. Meanwhile, the terminal sends the up-link message containing location update information using f1 and waits to receive the location update confirming message in B1.

If there are two sets of receiving systems in the terminal, the above-mentioned location update process and broadcast service can be performed simultaneously. When the location update is being performed, there is no need to break off the broadcast service.

The page monitoring function is added to the mobile terminal under broadcast service mode, the method for receiving the paging is the same as that of original service mode. The core network sends paging signal to the terminal, in detail, the core network selects the corresponding location area based on the received location information, sends down-link paging information according to broadcast service carrier frequency f3 or original service carrier frequency f2, respectively corresponding to broadcast service mode or original service mode.

The mobile terminal replies and initiates the calling through the original service hierarchy. Namely, when the user needs to reply or initiate a calling, the mode of the mobile terminal is switched to the original service hierarchy mode automatically. So, to increase the connection speed, the information of adjacent cells in original service hierarchy, such as frequency, scrambling code etc, for use by terminal, can be broadcast through broadcast channel by broadcast service hierarchy, in order to raise the searching speed of the terminal in original service hierarchy.

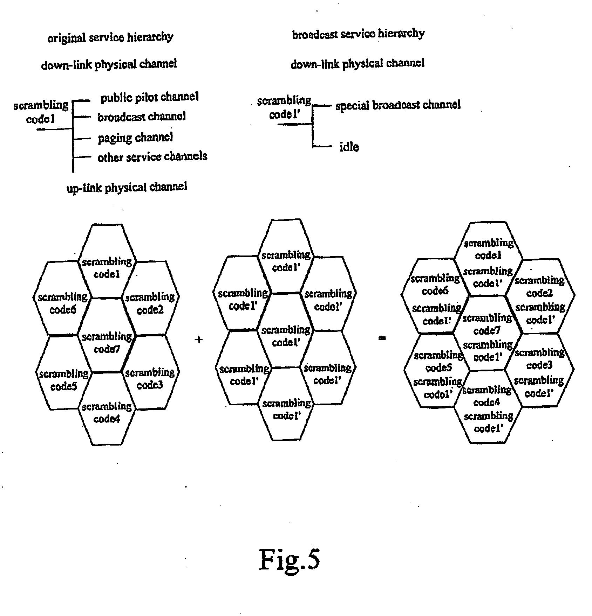

With reference to figure 5, this figure illustrates the structure and operating principle of the wireless access network when the technology scheme of using special scrambling codes is adopted. In this system structure, the broadcast service mode is newly added, namely, the network structure can be used to provide real-time broadcast service by adding special scrambling codes. The special scrambling codes for real-time broadcast service are only used in macro cells, and there is no need to add special scrambling codes to micro cells and pico cells.

In this technology scheme of using special scrambling codes for real-time broadcast service according to the invention, the wireless access network is divided into original mobile paging service hierarchy and newly added broadcast service hierarchy, the former providing speech communication, data transmission, wireless internet, video on command and so on, while the latter specially providing real-time broadcast service.

Since the broadcast program is totally the same in a certain area, and those cells are geographically superposed in the cell hierarchy structure of the 3^{rd} generation (3G) mobile communication system, when carrying out this scheme of special scrambling code, just a down-link scrambling code special for broadcast service needs being added to the transmitter of each cell in the original service macro cell coving hierarchy. Every cell holds the same scrambling code and channel code. This scrambling code is only for transmitting broadcasting information, while all the mobile terminals share the public pilot channels of the original cells.

Figure 5 shows that under this technology scheme, the original service hierarchy and broadcast service hierarchy are totally superposed in the structure of macro cell hierarchy. The original service hierarchy is divided into multiple cells, among which adjacent cells adopt different scrambling codes, such as scrambling code1, scrambling code2,..., scrambling code7 shown in Figure 5. There are up-link physical channels and down-link physical channels in original service hierarchy. The down-link physical channels include public pilot channel, broadcast channel, paging channel and other service channels, and these channels are indicated by corresponding scrambling codes of the cell, such as scrambling code1, scrambling code2,..., scrambling code7 shown in Figure 5. The broadcast service hierarchy is also divided into multiple cells and the cell structure is totally the same as that of the original service hierarchy, and adjacent cells adopt the same scrambling codes. The down-link physical channel includes special broadcast channel (the other one is idle), which is indicated as scrambling code 1' in each cell. The cell structure of original service hierarchy and broadcast service hierarchy over macro cell is formed by combining the two hierarchies together. Each cell is set two special scrambling codes, as scrambling code1 + scrambling code1', scrambling code2 + scrambling code1',..., scrambling code7 + scrambling code1' shown in Figure 5. The scrambling code1, scrambling code2,..., scrambling code7 are used to support the original service and stay invariable, while scrambling code1' is used to support the newly added real-time broadcast service.

In the above-mentioned structure, the operating mode of the mobile terminal keeps unchanged for the original service. The mobile terminal can support real-time broadcast service under both idle mode and connecting mode.

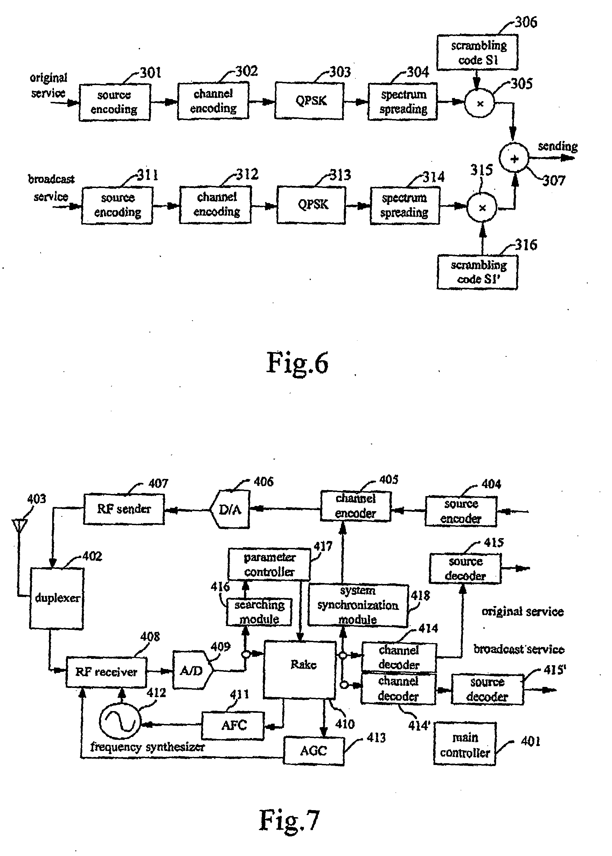

With reference to figure 6, this figure illustrates the flow of setting the down-link original service scrambling code and down-link special scrambling code in base station transmitter when sending real-time broadcast programs, including the modulating and spread spectrum process for both the original service and the broadcast service. When the down-link special scrambling code is being set, every cell is set two scrambling codes. The scrambling for original service keeps unchanged, namely only scrambling for broadcast service is needed to be added. The modulation and frequency spreading for original service is implemented through scrambling signals with scrambling code S 1 (306) in multiplier 305 after source encoding 301, channel encoding 302, Quaternary Phrase-Shift Keying (QPSK) 303 and spectrum spreading 304 for the signals. The modulation and frequency spreading for broadcast service is implemented through scrambling signals with scrambling code S1' (316) in multiplier 315 after source encoding 311, channel encoding 312, Quaternary Phrase-Shift Keying (QPSK) 313 and spectrum spreading 314 for the signals. The results of the two services after being scrambled are combined in adder 307, and sent after being amplified by the shared power amplification unit. In practice, the two scrambled results can be firstly amplified by individual power amplification unit respectively, and then sent after being combined.

When there is no broadcast program for the base station sender to send, the down-link special scrambling code S1' can be removed so as to increase the network capacity.

With reference to figure 7, this figure illustrates the structure and operating principle of the mobile terminal when the technology scheme of using special scrambling codes is adopted. The terminal includes a main controller 401, a sending unit which is comprised of a source encoder 404, a channel encoder 405, a Digital/Analog (D/A) converter 406 and a Radio Frequency (RF) sender 407, a receiving unit which is comprised of a Radio Frequency (RF) receiver 408, an Analog/Digital (A/D) converter 409, a frequency synthesizer 412, a searching module 416, a parameter controller 417, a RAKE combining receiver 410, an Automatic Frequency Control (AFC) module 411, an Automatic Gain Correction (AGC) module 413, a channel decoder for original service 414, a source decoder for original service 415, a channel decoder for broadcast service 414', a source decoder for broadcast service 415' and a system synchronization module 418, as well as an antenna 403 and a duplexer 402 shared by the sending unit and the receiving unit.

In the mobile terminal for implementing the above-mentioned technology scheme, a channel decoder module 414' and a source decoder module 415' for processing broadcast service scrambling codes are added after the special RAKE combining receiver 410 based on the existing hardware structure of mobile terminal. This special RAKE combining receiver 410 is used for receiving special broadcast service besides original service, and the scrambling code 1' of demodulating unit in the RAKE combining receiver 410 and channel code is the special broadcast channel code S1' (shown in Figure 6).

The mobile terminal supports broadcast service under both idle mode and connecting mode and the basic procedures are the same. Taking the idle mode for example, when the user needs to receive real-time broadcast, the mode of the terminal is switched to broadcast mode, while the terminal is still under idle mode for the original service.

When the terminal is receiving broadcast service in a macro cell, according to the channel estimation result for the public pilot frequency of this cell and the channel estimation result for the public pilot frequency of one or multiple adjacent cells with powerful signals, the received signals of multi cells are merged and the signals on broadcast channel are demodulated. Hereby, the terminal can still select and reselect cells, implement location update and receive paging information in terms of the process of original service.

When the terminal is receiving broadcast service in a micro cell or a pico cell, the processing is the same as above except that the broadcast service is not available in this cell. If the signal quality for broadcast service is below the service requirement, a macro cell must be selected to replace the original cell for receiving broadcast service.

To reduce interference from the added down-link scrambling code (such as scrambling code 1') to other service channels in the cell, the interference value from the added down-link scrambling code to other service channels can be estimated through the demodulated broadcast channel data and the known channel transmission condition, scrambling code, channel code etc. Then this interference value is subtracted from the received signal, thereby the receiving performance of other service channels is improved.

In the present invention, a method for providing real-time broadcast service in a mobile communication system is proposed by setting special carriers or special scrambling codes, which is especially adapted to provide real-time broadcast service in the 3^{rd} generation Code Division Multiple Access (CDMA) mobile communication system.

## Claims

1. A method for providing a real-time broadcast service in a mobile communication system, the mobile communication system comprises a radio access network and a plurality of mobile terminals, where the radio access network has an original service hierarchy with original service resources;
**characterized by**:
linking the real-time broadcast service to the radio access network (14);
adding a broadcast service hierarchy into the radio access network (14), assigning downlink special broadcast resources for the broadcast service hierarchy, the broadcast service hierarchy comprising a plurality of cells adopting different broadcast resources than the corresponding cells in the original service hierarchy, wherein the downlink special broadcast resources different from the original service resources are special scrambling codes or special carriers for providing the real-time broadcast service, and broadcasting the real-time broadcast service to the mobile terminals (15) through the downlink special broadcast resources;
wherein:
the mobile terminals (15) communicate with the radio access network (14) using the original service resources of the original service hierarchy, receive the real-time broadcast service using the downlink special broadcast resources, switch between the original service hierarchy and the broadcast service hierarchy, monitor paging of a cell when in the broadcast service hierarchy and switch from the broadcast service hierarchy to the original service hierarchy when the user of the mobile terminal needs to reply or initiate a call.

2. The method according to claim 1, wherein said linking the real-time broadcast service to the radio access network (14) comprising:
transmitting content information of the real-time broadcast service to an information transmitting server, and accessing the content information of the real-time broadcast service to the radio access network (14) by the information transmitting server.

3. The method according to claim 1, wherein the downlink special broadcast resources are downlink special carrier frequencies;
the method further comprising: dividing the broadcast service hierarchy into cells, the adjacent cells employ different scrambling codes, and defining multiple cells into a location area; and
when switching to the broadcast service hierarchy, the mobile terminal (15) staying in a cell of the broadcast service hierarchy and controlling bandoff of the cell.

4. The method according to claim 3, further comprising: setting a broadcast channel for broadcasting corresponding cell information and a paging channel for paging mobile terminals (15) in the cell of the broadcast service hierarchy.

5. The method according to claim 4, wherein said cell information includes location area code and paging channel configuration information of the cell in the broadcast service hierarchy, and carrier frequencies, scrambling codes, Random Access Channel <RACH>, an AICH public channel relating to RACH and Forward Access Channel <FACH> of the adjacent cells in the original service hierarchy.

6. The method according to claim 3, wherein the scrambling codes in the broadcast service hierarchy and those in the original service hierarchy are either the same or different; the cells of the broadcast service hierarchy and those of the original service hierarchy are either superposed or not.

7. The method according to claim 3, wherein the handoff includes location update which is triggered when the mobile terminal (15) switches between the broadcast service hierarchy and the original service hierarchy, and when the location area of the mobile terminal (15) changes in the broadcast service hierarchy.

8. The method according to claim 7, wherein said triggering location update when the location area changes in the broadcast service hierarchy comprising: the mobile terminal (15) obtaining information of cells in the original service hierarchy from the broadcast channel of the broadcast service hierarchy, the cells in the original service hierarchy are adjacent to the current cell of the broadcast service hierarchy, finding a cell in the original service hierarchy where the mobile terminal (15) can stay, and sending a random access request utilizing the Random Access Channel <RACH> in the cell of the original service hierarchy;
after receiving AICH information from the cell of the original service hierarchy, the mobile terminal (15) tuning the receiving frequency to the downlink carrier frequency, starting search and synchronization for the current cell of the broadcast service hierarchy, meanwhile sending a message containing location update information to the radio access network (14) utilizing the uplink carrier frequency of the original service hierarchy, and waiting to receive a location update confirming message at the current cell of then broadcast service hierarchy.

9. The method according to claim 3, wherein said monitoring paging in the broadcast service hierarchy comprising: the radio access network (14) selecting a cell in a corresponding location area according to the received location information of the mobile terminal (15), and sending downlink paging information according to the carrier frequency of the broadcast service hierarchy or the carrier frequency of the original service hierarchy.

10. The method according to claim 3, wherein said making a reply or initiating a call further comprising: sending information of the adjacent cells in the original service hierarchy utilizing the broadcast channel of the broadcast service hierarchy.

11. The method according to claim 3, wherein the mobile terminal (15) shares a set of receiving system and synchronizing system with other mobile terminals (15) in the broadcast service hierarchy and the original service hierarchy.

12. The method according to claim 3, wherein the mobile terminal (15) utilizes a different receiving system, and shares a set of synchronizing system with other mobile terminals (15) in the broadcast service hierarchy and the original service hierarchy.

13. The method according to claim 1, wherein the downlink special broadcast resources are downlink special scrambling codes;
the method further comprising: superposing the locations of cells of the broadcast service hierarchy over those of the original service hierarchy so as to form the structure of the cell of the original service hierarchy plus the cell of the broadcast service hierarchy, wherein the cells utilize the same downlink special scrambling code and a same special broadcast channel code for transmitting real-time broadcast information, the working mode of the mobile terminal (15) keeps unchanged for the original service, pilot channel of the cells in the original service hierarchy is shared, and the real-time broadcast service is supported under both idling mode and connecting mode.

14. The method according to claim 13, wherein said assigning downlink special scrambling codes in the broadcast service hierarchy comprising: adding a scrambling operation using the downlink special scrambling codes in the base station sender of each cell in the original service hierarchy, wherein the information of the broadcast service hierarchy and that of the original service hierarchy either share the same power amplifier or utilize respective power amplifiers.

15. The method according to claim 14, wherein the process of the sender includes performing modulation and spectrum spreading for the original service and real-time broadcast service;
the modulation and spectrum spreading for the original service includes source encoding (301), channel encoding (302), Quaternary Phrase-Shift Keying <QPSK> (303), spectrum spreading (304) and scrambling (305) the spectrum spread results utilizing the downlink scrambling codes (306) of each cell for the original service;
the modulation and spectrum spreading for the real-time broadcast service includes source encoding (311), channel encoding (312), QPSK (313), spectrum spreading (314) and scrambling (315) the spectrum spread results utilizing the downlink special scrambling codes (316) for the real-time broadcast service.

16. The method according to claim 13, wherein the demodulation unit of RAKE receiver of the mobile terminal (15) adopts downlink special scrambling codes for specially receiving the real-time broadcast service; channel decoding and source decoding is implemented respectively for the original service and real-time broadcast service after the signals pass the RAKE receiver; the channel code of RAKE receiver is the special broadcast channel code, namely the downlink special scrambling code.

17. The method according to claim 13, wherein said structure of the cell of the original service hierarchy plus the cell of the broadcast service hierarchy is that range and location division of the cell of the original service hierarchy plus the broadcast service hierarchy is the same as that of the original service macro cell coving hierarchy in which the mobile network is covered by macro cells.

18. The method according to claim 13, wherein the method further comprising: keeping the mobile terminal (15) under idle mode for the original service when the mobile terminal (15) switches to the broadcast service hierarchy; when the mobile terminals (15) is located in a macro cell, according to the channel estimation result for the public pilot frequency of this cell and the channel estimation result for the public pilot frequency of one or multiple adjacent cells with powerful signals, merging the received signals of multi cells and demodulating the signals on special broadcast channel; the mobile terminal (15) selecting and reselecting cells, implementing location update and receiving paging information in terms of the process of original service; when the mobile terminal (15) is located in a micro cell or a pico cell, according to the channel estimation result for the public pilot frequency of one or multiple adjacent cells with powerful signals, merging the received signals of multi cells and demodulating the signals on special broadcast channel; the mobile terminal (15) selecting and reselecting cells, implementing location update and receiving paging information in terms of the process of original service.

19. The method according to claim 13, further comprising: the mobile terminal (15) evaluating the interference value to a service channel caused by the downlink special scrambling codes according to the demodulated special broadcast channel data and the information of channel transmission condition, scrambling code and channel code, and subtracting this interference value from the received signal.

20. The method according to any of claims 1 to 19, wherein the real-time broadcast service is provided to more than one mobile user simultaneously by the same network sources supporting the real-time broadcast service, wherein the same network sources supporting the real-time broadcast service are the downlink special broadcast resources.

21. A mobile communication system for providing a real-time broadcast service, comprising: a radio access network (14), having an original service hierarchy for providing an original service wherein original service resources are assigned to the original service hierarchy;
**characterized in that**:
the radio access network (14) further comprising a broadcast service hierarchy for providing the real-time broadcast service, the broadcast service hierarchy comprising a plurality of cells adopting different downlink special broadcast resources than the corresponding cells in the original service hierarchy, wherein the downlink special broadcast resources different from the original service resources are special scrambling codes or special carriers for providing the real-time broadcast service; and
a plurality of mobile terminals (15), wherein each of the mobile terminal (15) is adapted to communicate with the radio access network using the original service resources of the original service hierarchy, receive the real-time broadcast service using the downlink special broadcast resources, switch between the original service hierarchy and the broadcast service hierarchy, monitor paging of a cell when in the broadcast service hierarchy, and switches between the original service hierarchy and the broadcast service hierarchy, and switch from the broadcast service hierarchy to the original service hierarchy when the user of the mobile terminal needs to reply or initiate a call.

22. The system according to claim 21, wherein the real-time broadcast service is provided to more than one mobile user simultaneously by the same network sources supporting the real-time broadcast service, wherein the same network sources supporting the real-time broadcast service are the downlink special broadcast resources.

## Patentansprüche

1. Verfahren zum Bereitstellen eines Echtzeit-Rundsendediensts in einem Mobilkommunikationssystem, wobei das Mobilkommumkationssystem ein Funkzugangsnetz und eine Vielzahl von Mobilendgeräten umfasst, wo das Funkzugangsnetz eine ursprüngliche Diensthierarchie mit ursprünglichen Dienstressourcen hat;
**gekennzeichnet durch**:
Verbinden des Echtzeit-Rundsendediensts mit dem Funkzugangsnetz (14);
Hinzufügen einer Rundsendediensthierarchie zum Funkzugangsnetz (14), Zuweisen von speziellen Downlink-Rundsenderessourcen für die Rundsendediensthierarchie, wobei die Rundsendediensthierarchie eine Vielzahl von Zellen umFasst, die andere Rundsenderessourcen übernehmen als die entsprechenden Zellen in der ursprünglichen Diensthierarchie, worin die von den ursprünglichen Dienstressourcen verschiedenen speziellen Downlink-Rundsenderessourcen spezielle Scramblingcodes oder spezielle Träger zum Bereitstellen des Echtzeit-Rundsendediensts sind, und Rundsenden des Echtzeit-Rundsendediensts an die Mobilendgeräte (15) **durch** die speziellen Downlink-Rundsenderessourcen;
worin:
die Mobilendgeräte (15) mit dem Funkzugangsnetz (14) unter Verwendung der ursprünglichen Dienstressourcen der ursprüngliche Diensthierarchie kommunizieren, den Echtzeit-Rundsendedienst unter Verwerdung der speziellen Downlink-Rundsenderessourcen empfangen, zwischen der ursprünglichen Diensthierarchie und der Rundsendediensthierarchie umschalten, das Paging einer Zelle überwachen, wenn sie in der Rundsendediensthierarchie ist, und von der Rundsendediensthierarchie zur ursprünglichen Diensthierarchie umschalten, wenn der Benutzer des Mobilendgeräts antworten oder einen Anruf initiieren muss.

2. Verfahren nach Anspruch 1, worin das Verbinden des Echtzeit-Rundseudediensts mit dem Funkzugangsnetz (14) Folgendes umfasst:
Übertragen von Inhaltsinformation des Echtzeit-Rundsendediensts an einen Information übertragenden Server und Zugreifen auf die Inhaltsinformation des Echtzeit-Rundsendediensts an das Funkzugangsnetz (14) durch den Information übertragenden Server.

3. Verfahren nach Anspruch 1, worin die speziellen Downlink-Rundsenderessourcen spezielle Downlink-Trägerfrequenzen sind;
das Verfahren außerdem umfassend: Unterteilen der Rundsendediensthierarchie in Zellen, wobei die benachbarten Zellen verschiedene Scramblingcodes einsetzen, und Definieren von Mehrfachzellen in einen Aufenthaltsbereich; und
wobei beim Umschalten auf die Rundsendediensthierarchie das Mobilendgerät (15) in einer Zelle der Rundsendediensthieratchie bleibt und den Handover der Zelle steuert.

4. Verfahren nach Anspruch 3, außerdem umfassend: Einstellen eines Rundsendekanals zum Rundsenden entsprechender Zelleninformation und eines Paging-Kanals zum Paging von Mobilendgeraten (15) in der Zelle der Rundsendediensthierarchie.

5. Verfahren nach Anspruch 4, worin die Zelleninformation Aufenthaltsbereichscode (Location Area Code, LAC) und Paging-Kanal-Konfigurationsinformation der Zelle in der Rundsendediensthierarchie enthält sowie Trägerfrequenzen, Scramblingcodes, Zufallszugriffskanal <RACH>, einen öffentliche Empfangsanzeigekanal AICH (Acquisiticn Indication Channel), der sich auf den RACH und den Vorwärtszugriffskanal <FACH> der benachbarten Zellen in der ursprünglichen Diensthierarchie bezieht.

6. Verfahren nach Anspruch 3, worin die Scramblingcodes in der Rundsendediensthierarchie und die in der ursprünglichen Diensthierarchie entweder identisch oder verschieden sind; die Zellen der Rundsendediensthierarchie und die der ursprünglichen Diensthierarchie entweder üherlagert sind oder nicht.

7. Verfahren nach Anspruch 3, worin der Handover Standortaktualisierung enthält, die ausgelöst wird, wenn das Mobilendgerät (15) zwischen der Rundsendediensthierarchie und der ursprünglichen Diensthierarchie umschaltet und wenn sich der Autenthaltsbereich des Mobilendgeräts (15) in der Rundsendediensthierarchie wandert.

8. Verfahren nach Anspruch 7, worin das Auslösen der Standortaktualisierung bei Änderung des Aufenthaltsbereichs in der Rundsendediensthierarchie Folgendes umfasst: das Mobilendgerät (15) erhält Information über Zellen in der ursprünglichen Diensthierarchie vom Rundsendekanal der Rundsendediensthierarchie, wobei die Zellen in der ursprünglichen Diensthierarchie der gegenwärtigen Zelle der Rundsendediensthierarchie benachbart sind, findet eine Zelle in der ursprünglichen Diensthierarchie, wo das Mobilendgerät (15) bleiben kann, und sendet eine Zufallszugriffsanforderung unter Nutzung des Zufallszugriffskanals <RACH> in der Zelle der ursprünglichen Diensthierarchie;
nach Empfang von AICH-Information von der Zelle der ursprünglichen Diensthierarchie stellt das Mobilendgerät (15) die Empfangsfrequenz auf die Downlink-Trägerfrequenz ein, startet Suche und Synchronisation für die gegenwärtige Zelle der Rundsendediensthierarchie, sendet inzwischen eine Standortaktualisierungsinformation enthaltende Nachricht an das Funkzugangsnetz (14) unter Nutzung der Uplink-Trägerfrequenz der ursprünglichen Diensthierarchie und wartet auf den Empfang einer Standortaktualisierungs-Bestätigungsnachricht an der gegenwärtigen Zelle der Rundsendediensthierarchie.

9. Verfahren nach Anspruch 3, worin die Paging-Überwachung in der Rundsendediensthierarchie umfasst: dass das Funkzugangsnetz (14) eine Zelle in einem entsprechenden Aufenthaltsbereich gemäß der empfangenen Standortinformation des Mobilendgeräts (15) auswählt und Downlink-Paging-Information gemäß der Trägerfrequenz der Rundsendediensthierarchie oder der Trägerfrequenz der ursprünglichen Diensthierarchie sendet.

10. Verfahren nach Anspruch 3, worin das Antworten oder Initiieren eines Anrufs außerdem umfasst; dass Information der benachbarten Zellen in der ursprünglichen Diensthierarchie unter Nutzung des Rundsendekanals der Rundsendediensthierarchie gesendet wird.

11. Verfahren nach Anspruch 3, worin sich das Mobilendgeiät (15) ein Gerät des Empfangssystems und Synchronisationssystems mit anderen Mobilendgeräten (15) in der Rundsendediensthierarchie und der ursprünglichen Diensthierarchie teilt.

12. Verfahren nach Anspruch 3, worin das Mobilendgerät (15) ein verschiedenes Empfangssystem nutzt und sich ein Synchronisationssystemgerät mit anderen Mobilendgeräten (15) in der Rundsendediensthierarchie und der ursprünglichen Diensthierarchie teilt.

13. Verfahren nach Anspruch 1, worin die speziellen Dowulink-Rundsenderessourcen spezielle Downlink-Scramblingcodes sind;
wobei das Verfahren außerdem umfasst: dass die Zellenstandorte der Rundsendediensthierarchie über die der ursprünglichen Diensthierarchie gelagert werden, um die Struktur der Zelle der ursprünglichen Diensthierarchie plus der Zelle der Rundsendediensthierarchie zu bilden, worin die Zellen denselben speziellen Downlink-Scramblingcode und denselben speziellen Rundsendekanalcode zum Übertragen von Echtzeit-Rundsendeinformation nutzen, der Arbeitsmodus des Mobilendgeräts (15) für den ursprünglichen Dienst unverändert bleibt, der Pilotkanal der Zellen in der ursprünglichen Diensthierarchie gemeinsam genutzt wird und der Echtzeit-Rundsendedienst sowohl im Idle-Modus als auch im Verbindungsmodus unterstützt wird.

14. Verfahren nach Anspruch 13, worin das Zuweisen von speziellen Downlink-Scramblingcodes in der Rundsendediensthierarchie umfasst: dass eine Scramblingoperation unter Verwendung der speziellen Downlink-Scramblingcodes im Basisstationssender jeder Zelle in der ursprünglichen Diensthierarchie hinzugefügt wird, worin die Information der Rundsendediensthierarchie und die der ursprünglichen Diensthierarchie sich entweder denselben Leistungsverstärker teilen oder jeweilige Leistungsverstärker nutzen.

15. Verfahren nach Anspruch 14, worin der Senderprozess das Ausführen von Modulation und Spektrumsspreizung für den ursprünglichen Dienst und den Echtzeit-Rundsendedienst enthält;
die Modulation und Spektrumsspreizung für den ursprünglichen Dienst Quellcodierung (301), Kanalcodierung (302), QPSK(Quaternary Phase Shift Keying)-Modulieren (303), Spektrumsspreizung (304) und Scrambling (305) der Ergebnisse der Spektrumsspreizung enthalten, unter Verwendung der Downlink-Scramblingcodes (306) jedes Zelle für den ursprünglichen Dienst;
die Modulation und Spektrumsspreizung für den Echtzeit-Rundsendedienst Quellcodierung (311), Kanalcodierung (312), QPSK (313), Spektrumsspreizung (314) und Scrambling (315) der Ergebnisse der Spektrumsspreizung enthalten, unter Verwendung der speziellen Downlink-Scramblingcodes (316) für den Echtzeit-Rundsendedienst.

16. Verfahren nach Anspruch 13, worin die Demodulationseinheit des RAKE-Empfängers des Mobilendgeräts (15) spezielle Downlink-Scramblingcodes übernimmt, um speziell den Echtzeit-Rundsendedienst zu empfangen; Kanaldecodierung und Quelldecodierung für den ursprünglichen Dienst bzw. den Echtzeit-Rundsendedienst implementiert wird, nachdem die Signale den RAKE-Empfänger durchlaufen haben; der Kanalcode des RAKE-Empfängers der spezielle Rundsendekanalcode ist, nämlich der spezielle Downlink-Scramblingcode.

17. Verfahren nach Anspruch 13, worin die Struktur der Zelle der ursprünglichen Diensthierarchie plus der Zelle der Rundsendediensthierarchie dieser Bereich ist, und Standortunterteilung der Zelle der ursprünglichen Diensthierarchie plus der Rundsendediensthierarchie dieselbe ist wie die der überdeckenden Hierarchie von Makrozellen des ursprünglichen Diensts, worin das Mobilnetz von Makrozellen abgedeckt ist.

18. Verfahren nach Anspruch 13, worin das Verfahren außerdem umfasst: dass das Mobilextdgaxät (15) für den ursprünglichen Dienst im Idle-Modus gehalten wird, wenn das Mobilendgerät (15) auf die Rundsendediensthierarchie umschaltet; dass, wenn sich das Mobilendgerät (15) in einer Makrozelle aufhält, gemäß dem Kanalschätzergebnis für die öffentliche Pilotfrequenz dieser Zelle und dem Kanalschätzergebnis für die öffentliche Pilotfrequenz von einer oder mehreren benachbarten Zellen mit starken Signalen die empfangenen Signale von Mehrfachzellen gemischt werden und die Signale auf dem speziellen Rundsendekanal demoduliert werden; dass das Mobilendgerät (15) Zellen auswählt und erneut auswählt, Standortaktualisierung implementiert und Paging-Information in Bezug auf den Prozess des ursprünglichen Diensts empfängt; dass, wenn sich das Mobilendgerät (15) in einer Mikrozelle oder einer Picozelle aufhält, gemäß dem Kanalschätzergebnis für die öffentliche Pilotfrequenz von einer oder mehreren benachbarten Zellen mit starken Signalen die empfangenen Signale von Mehrfachzellen gemischt werden und die Signale auf dem speziellen Rundsendekanal demoduliert werden; dass das Mobilendgerät (15) Zellen auswählt und erneut auswählt, Standortaktualisierung implementiert und Paging-Information in Bezug auf den Prozess des ursprüngliche Diensts empfängt.

19. Verfahren nach Anspruch 13, außerdem umfassend: dass das Mobilendgerät (15) den Interferenzwert zu einem Dienstkanal auswertet, der durch die speziellen Downlink-Seraniblingcodes hervorgerufen wird gemäß den demodulierten speziellen Rundsendekanaldaten und der Information der Kanalübertragungsbedingung, des Scramblingcodes und des Kanalcodes, und diesen Interierenzwert vom empfangenen Signal subtrahiert.

20. Verfahren nach einem der Ansprüche 1 bis 19, worin der Echtzeit-Rundsendedienst gleichzeitig mehr als einem Mobilbenutzer durch dieselben Netzquellen bereitgestellt wird, die den Echtzeit-Rundsendedienst unterstützen, worin dieselben Netzquellen, die den Echtzeit-Rundsendedienst unterstützen, die speziellen Downlink-Rundsenderessourcen sind.

21. Mobilkommunikationssystem zum Bereitstellen eines Echtzeit-Rundsendediensts, umfassend: ein Funkzugangsnetz (14), das eine ursprüngliche Diensthierarchie zum Bereitstellen eines ursprünglichen Diensts hat, worin ursprüngliche Dienstressourcen der ursprünglichen Diensthierarchie zugewiesen werden;
**dadurch gekennzeichnet, dass**:
das Funkzugangsnetz (14) außerdem eine Rundsendediensthierarchie zum Bereitstellen des Echtzeit-Rundsendediensts umfasst, wobei die Rundsendediensthierarchie eine Vielzahl von Zellen umfasst, die andere spezielle Downlink-Rundsenderessourcen übernehmen als die entsprechenden Zellen in der ursprünglichen Diensthierarchie, worin die von den ursprünglichen Dienstressourcen verschiedenen speziellen Downlink-Rundsenderessourcen spezielle Scramblingcodes oder spezielle Träger zum Bereitstellen des Echtzeit-Rundsendediensts sind; und
eine Vielzahl von Mobilendgeräten (15), worin jedes der Mobilendgeräte (15) dazu angepasst ist, mit dem Funkzugangsnetz unter Verwendung der ursprünglichen Dienstressourcen der ursprünglichen Diensthierarchie zu kommunizieren, den Echtzeit-Rundseudedienst unter Verwendung der speziellen Downlink-Rundsenderessourcen zu empfangen, zwischen der ursprünglichen Diensthierarchie und der Rundsendediensthierarchie umzuschalten, das Paging einer Zelle zu überwachen, wenn sie in der Rundsendediensthierarchie ist, und zwischen der ursprünglichen Diensthierarchie und der Rundsendediensthierarchie umzuscbalten und von der Rundsendediensthierarchie zur ursprünglichen Diensthierarchie umzuschalten, wenn der Benutzer des Mobilendgeräts antworten oder einen Anruf initiieren muss.

22. System nach Anspruch 21, worin der Echtzeit-Rundsendedienst gleichzeitig mehr als einem Mobilbenutzer durch dieselben Netzquellen bereitgestellt wird, die den Echtzeit-Rundsendedienst unterstützen, worin dieselben den Echtzeit-Rundsendedienst unterstützenden Netzquellen die speziellen Downlink-Rundsenderessourcen sind.

## Revendications

1. Procédé pour fournir un service de diffusion en temps réel dans un système de communication mobile, le système de communication mobile comprenant un réseau d'accès radio et une pluralité de terminaux mobiles, où le réseau d'accès radio a une hiérarchie de services d'origine avec des ressources de services d'origine ;
**caractérisé en ce qu'**il consiste à :
lier le service de diffusion en temps réel au réseau d'accès radio (14) ;
ajouter une hiérarchie de services de diffusion dans le réseau d'accès radio (14), attribuer des ressources de diffusion spéciales de liaison descendante pour la hiérarchie de services de diffusion, la hiérarchie de services de diffusion comprenant une pluralité de cellules adoptant des ressources de diffusion différentes de celles des cellules correspondantes dans la hiérarchie de services d'origine, dans lequel les ressources de diffusion spéciales de liaison descendante différentes des ressources de services d'origine sont des codes de brouillage spéciaux ou des porteuses spéciales pour fournir le service de diffusion en temps réel, et diffuser le service de diffusion en temps réel vers les terminaux mobiles (15) par l'intermédiaire des ressources de diffusion spéciales de liaison descendante ;
dans lequel :
les terminaux mobiles (15) communiquent avec le réseau d'accès radio (14) en utilisant les ressources de services d'origine de la hiérarchie de services d'origine, reçoivent le service de diffusion en temps réel en utilisant les ressources de diffusion spéciales de liaison descendante, commutent entre la hiérarchie de services d'origine et la hiérarchie de services de diffusion, surveillent l'appel d'une cellule lorsqu'elle est dans la hiérarchie de services de diffusion et commutent de la hiérarchie de services de diffusion vers la hiérarchie de services d'origine lorsque l'utilisateur du terminal mobile doit répondre à un appel ou lancer un appel.

2. Procédé selon la revendication 1, dans lequel ladite liaison entre le service de diffusion en temps réel et le réseau d'accès radio (14) consiste à :
émettre des informations de contenu du service de diffusion en temps réel vers un serveur d'émission d'informations, et accéder aux informations de contenu du service de diffusion en temps réel pour le réseau d'accès radio (14) par le serveur d'émission d'informations.

3. Procédé selon la revendication 1, dans lequel les ressources de diffusion spéciales de liaison descendante sont des fréquences de porteuse spéciales de liaison descendante ;
le Procédé consistant en outre à : diviser la hiérarchie de services de diffusion en cellules, les cellules adjacentes utilisant différents codes de brouillage, et définir de multiples cellules dans une zone d'emplacement ; et
lors de la commutation vers la hiérarchie de services de diffusion, le terminal mobile (15) reste dans une cellule de la hiérarchie de services de diffusion et commande le transfert intercellulaire de la cellule.

4. Procédé selon la revendication 3, consistant en outre à : définir un canal de diffusion pour la diffusion des informations de cellule correspondants et un canal d'appel pour l'appel des terminaux mobiles (15) dans la cellule de la hiérarchie de services de diffusion.

5. Procédé selon la revendication 4, dans lequel lesdites informations de cellule comprennent des informations de code de zone d'emplacement et de configuration de canal d'appel de la cellule dans la hiérarchie do services de diffusion, et des fréquences de porteuse, des codes de brouillage, un canal d'accès aléatoire <RACH>, un canal public AICH concernant le canal RACH et le canal d'accès avant <FACH> des cellules adjacentes dans la hiérarchie de services d'origine.

6. Procédé selon la revendication 3, dans lequel les codes de brouillage dans la hiérarchie de services de diffusion et ceux dans la hiérarchie de services d'origine sont soit identiques, soit différents ; les cellules de la hiérarchie de services de diffusion et celles de la hiérarchie de services d'origine sont superposées ou non.

7. Procédé selon la revendication 3, dans lequel le transfert intercellulaire comprend la mise à jour d'emplacement qui est déclenchée lorsque le terminal mobile (15) commute entre la hiérarchie de services de diffusion et la hiérarchie de services d'origine, et lorsque la zone d'emplacement du terminal mobile (15) change dans la hiérarchie de services de diffusion.

8. Procédé selon la revendication 7, dans lequel ledit déclenchement de la mise à jour d'emplacement lorsque la zone d'emplacement change dans la hiérarchie de services de diffusion consiste en ce que : le terminal mobile (15) obtient des informations de cellules dans la hiérarchie de services d'origine à partir du canal de diffusion de la hiérarchie de services de diffusion, les cellules dans la hiérarchie de services d'origine sont adjacentes à la cellule actuelle de la hiérarchie de services de diffusion, trouve une cellule dans la hiérarchie de services d'origine où le terminal mobile (15) peut rester, et envoie une demande d'accès aléatoire en utilisant le canal d'accès aléatoire <RACH> dans la cellule de la hiérarchie de services d'origine ;
après réception des informatisons AICH de la cellule de la hiérarchie de services d'origine, le terminal mobile (15) accorde la fréquence de réception à la fréquence de porteuse de liaison descendante, débute une recherche et une synchronisation pour la cellule actuelle de la hiérarchie de services de diffusion, envoie pendant ce temps un message contentant des informations de mise à jour d'emplacement au réseau d'accès radio (14) en utilisant la fréquence de porteuse de liaison montante de la hiérarchie de services d'origine, et attend de recevoir un message de confirmation de mise à jour d'emplacement au niveau de la cellule actuelle de la hiérarchie de services de diffusion.

9. Procédé selon la revendication 3, dans lequel ladite surveillance d'appel dans la hiérarchie de services de diffusion consiste en ce que : le réseau d'accès radio (14) sélectionne une cellule dans une zone d'emplacement correspondante en fonction des informations d'emplacement reçues du terminal mobile (15), et envoie des informations d'appel de liaison descendante en fonction de la fréquence de porteuse de la hiérarchie de services de diffusion ou de la fréquence de porteuse de la hiérarchie de services d'origine.

10. Procédé selon la revendication 3, dans lequel ladite exécution d'une réponse ou ledit lancement d'un appel consiste en outre à : envoyer des informations des cellules adjacentes dans la hiérarchie de services d'origine en utilisant le canal de diffusion de la hiérarchie de services de diffusion.

11. Procédé selon la revendication 3, dans lequel le terminal mobile (15) partage un ensemble de système de réception et de système de synchronisation avec les autres terminaux mobiles (15) dans la hiérarchie de services de diffusion et la hiérarchie de services d'origine.

12. Procédé selon la revendication 3, dans lequel le terminal mobile (15) utilise un système de réception différent, et partage un ensemble de système de synchronisation avec les autres terminaux mobiles (15) dans la hiérarchie de services de diffusion et la hiérarchie de services d'origine,

13. Procédé selon la revendication 1, dans lequel les ressources de diffusion spéciales de liaison descendante sont des codes de brouillage spéciaux de liaison descendante ;
le procédé consistant en outre à : superposer les emplacements de cellules de la hiérarchie de services de diffusion à ceux de la hiérarchie de services d'origine de manière à former la structure de la cellule de la hiérarchie de services d'origine plus la cellule de la hiérarchie de services de diffusion, dans lequel les cellules utilisent le même code de brouillage spécial de liaison descendante et le même code de canal de diffusion spécial pour émettre des informations de diffusion en temps réel, le mode de fonctionnement du terminal mobile (15) reste inchangé pour le service d'origine, le canal pilote des cellules dans la hiérarchie de services d'origine est partagé, et le service de diffusion en temps réel est pris en charge à la fois dans le mode inoccupé et dans le mode de connexion.

14. Procédé selon la revendication 13, dans lequel ladite attribution des codes de brouillage spéciaux de liaison descendante dans la hiérarchie de services de diffusion consiste à : ajouter une opération de brouillage utilisant les codes de brouillage spéciaux de liaison descendante dans l'émetteur de station de base de chaque cellule dans la hiérarchie de services d'origine, dans lequel les informations de la hiérarchie de services de diffusion et celles de la hiérarchie de services d'origine soit partagent le même amplificateur de puissance, soit utilisent des amplificateurs de puissance respectifs.

15. Procédé selon la revendication 14, dans lequel le processus de l'émetteur comprend l'exécution d'une modulation et d'un étalement de spectre pour le service d'origine et le service de diffusion en temps réel;
la modulation et l'étalement de spectre pour le service d'origine comprennent l'encodage de source (301), l'encodage de canal (302), la modulation par déplacement de phase quaternaire <QPSK> (303), l'étalement de spectre (304) et le brouillage (305) des résultats de l'étalement de spectre en utilisant les codes de brouillage de liaison descendante (306) de chaque cellule pour le service d'origine ;
la modulation et l'étalement de spectre pour le service de diffusion en temps réel comprennent l'encodage de source (311), l'encodage de canal (312), la modulation QPSK (313), l'étalement de spectre (314) et le brouillage (315) des résultats de l'étalement de spectre en utilisant les codes de brouillage spéciaux de liaison descendante (316) pour le service de diffusion en temps réel.

16. Procédé selon la revendication 13, dans lequel l'unité de démodulation du récepteur RAKE du terminal mobile (15) adopte des codes de brouillage spéciaux de liaison descendante pour recevoir de manière spéciale le service de diffusion en temps réel ; un décodage de canal et un décodage de source sont mis en oeuvre respectivement pour le service d'origine et le service de diffusion en temps réel après le passage des signaux par le récepteur RAKE ; le code de canal du récepteur RAKE est le code de canal de diffusion spécial, à savoir le code de brouillage spécial de liaison descendante.

17. Procédé selon la revendication 13, dans lequel ladite structure de la cellule de la hiérarchie de services d'origine plus la cellule de la hiérarchie de services de diffusion est cette plage et la division d'emplacement de la cellule de la hiérarchie de services d'origine plus la hiérarchie de services de diffusion est identique à celle de la hiérarchie de couverture de macro-cellules de services d'origine dans laquelle le réseau mobile est couvert par des macro-cellules.

18. Procédé selon la revendication 13, dans lequel le procédé consiste en outre à : maintenir le terminal mobile (15) dans un mode inoccupé pour le service d'origine lorsque le terminal mobile (15) commute vers la hiérarchie de services de diffusion ; lorsque le terminal mobile (15) est situé dans une macro-cellule, en fonction du résultat d'estimation de canal pour la fréquence pilote publique de cette cellule et du résultat d'estimation de canal pour la fréquence pilote publique d'une ou de multiples cellules adjacentes avec des signaux puissants, fusionner les signaux reçus des multiples cellules et démoduler les signaux sur le canal de diffusion spécial ; le terminal mobile (15) sélectionnant et resélectionnant des cellules, effectuant une mise àjour d'emplacement et recevant des informations d'appel en termes de processus de service d'origine ; lorsque le terminal mobile (15) est situé dans une microcellule ou une pico-cellule, en fonction du résultat d'estimation de canal pour la fréquence pilote publique d'une ou de multiples cellules adjacentes avec des signaux puissants, fusionner les signaux reçus des multiples cellules et démoduler les signaux sur le canal de diffusion spécial ; le terminal mobile (15) sélectionnant et resélectionnant des cellules, effectuant une mise à jour d'emplacement et recevant des informatisons d'appel en termes de processus de service d'origine.

19. Procédé selon la revendication 13, consistant en outre en ce que : le terminal mobile (15) évalue la valeur d'interférence pour un canal de service provoquée par les codes de brouillage spéciaux de liaison descendante en fonction des données de canal de diffusion spécial démodulées et des informations de condition d'émission de canal, de code de brouillage et de code de canal, et soustrait cette valeur d'interférence du signal reçu.

20. Procédé selon l'une quelconque des revendications 1 à 19, dans lequel le service de diffusion en temps réel est fourni à plusieurs utilisateurs mobiles simultanément par les mêmes sources de réseau prenant en charge le service de diffusion en temps réel, dans lequel les mêmes sources de réseau prenant en charge le service de diffusion en temps réel sont les ressources de diffusion spéciales de liaison descendante.

21. Système de communication, mobile pour fournir un service de diffusion en temps réel, comprenant : un réseau d'accès radio (14), ayant une hiérarchie de services d'origine pour fournir un service d'origine, dans lequel des ressources de services d'origine sont attribuées à la hiérarchie de services d'origine ;
**caractérisé en ce que** :
le réseau d'accès radio (14) comprend en outre une hiérarchie de services de diffusion pour fournir le service de diffusion en temps réel, la hiérarchie de services de diffusion comprenant une pluralité de cellules adoptant des ressources de diffusion spéciales de liaison descendante différentes des cellules correspondantes de la hiérarchie de services d'origine, dans lequel les ressources de diffusion spéciales de liaison descendante différentes des ressources de services d'origine sont des codes de brouillage spéciaux ou des porteuses spéciales pour fournir le service de diffusion en temps réel ; et
une pluralité de terminaux mobiles (15), dans lequel chacun des terminaux mobiles (15) est adapté pour communiquer avec le réseau d'accès radio en utilisant les ressources de services d'origine de la hiérarchie de services d'origine, pour recevoir le service de diffusion en temps réel en utilisant les ressources de diffusion spéciales de liaison descendante, pour commuter entre la hiérarchie de services d'origine et la hiérarchie de services de diffusion, pour surveiller un appel d'une cellule lorsqu'elle est dans la hiérarchie de services de division, et commute entre la hiérarchie de services d'origine et la hiérarchie de services de diffusion, et pour commuter de la hiérarchie de services de diffusion vers la hiérarchie de services d'origine lorsque l'utilisateur du terminal mobile doit répondre ou lancer un appel.

22. Système selon la revendication 21, dans lequel le service de diffusion en temps réel est fourni à plusieurs utilisateurs mobiles simultanément par les mêmes sources de réseau prenant en charge le service de diffusion en temps réel, dans lequel les mêmes sources de réseau prenant en charge le service de diffusion en temps réel sont les ressources de diffusion spéciales de liaison descendante.
